# EUROPÄISCHE PATENTSCHRIFT

(11) **EP 0 760 502 B1**
(45) Veröffentlichungstag und Bekanntmachung des Hinweises auf die Patenterteilung: **07.11.2001**
(21) Anmeldenummer: 96113607.4
(22) Anmeldetag: 23.08.1996
(51) Int. Cl.: G06F 7/24, G06F 7/00

(54) **Ordnungsverfahren für Zugehörigkeitsfunktionswerte linguistischer Eingangswerte in einem Fuzzy-Logic-Prozessor und Anordnung zu deren Durchführung**
Ranking method for membership function values of linguistic input values in a fuzzy logic processor and device for carrying out the method
Procédé de classement pour valeurs de fonctions d'appartenance de valeurs d'entrée linguistiques dans un processeur à logique floue et dispositif mettant en oeuvre un tel procédé

(30) Priorität: 28.08.1995 DE 19531635
(43) Veröffentlichungstag der Anmeldung: 05.03.1997
(73) Patentinhaber: Infineon Technologies AG, 81669 München (DE)
(72) Erfinder: Menke, Manfred, 80799 München (DE)
(74) Vertreter: Zedlitz, Peter, Dipl.-Inf.

(56) Entgegenhaltungen:
- FR-A- 2 660 476
- US-A- 5 398 299
- US-A- 5 408 675
- PROCEEDINGS OF THE INTERNATIONAL SYMPOSIUM ON CIRCUITS AND SYSTEMS, SAN DIEGO, MAY 10 - 13, 1992, Bd. 3 OF 6, 10.Mai 1992, INSTITUTE OF ELECTRICAL AND ELECTRONICS ENGINEERS, Seiten 1069-1072, XP000338132 CHAKRABARTI C ET AL: "MEDIAN FILTER ARCHITECTURE BASED ON SORTING NETWORKS"

## Beschreibung

Bei Fuzzy-Logic-Prozessoren stellt sich im allgemeinen die Aufgabe den Speicherplatzbedarf für die Regelbasis zu minimieren und die Verarbeitungsgeschwindigkeit möglichst zu erhöhen. Charakteristisch für eine Fuzzy-Logik ist, daß sich mindestens zwei Zugehörigkeitsfunktionen von linguistischen Werten überlappen, das heißt, daß für einen scharfen Eingangswert mindestens zwei Zugehörigkeitsfunktionswerte auftreten können. Allgemein können bei einem Überlappungsgrad ü bis zu ü linguistische Werte bzw. Werte der Zugehörigkeitsfunktionen dieser linguistischen Werte gleichzeitig durch einen scharfen Eingangswert getroffen sein. Im Extremfall kann dabei der Bedingungsteil einer Regel für jeden Eingangsinnvollerweise Vergleiche mit bis zu ü linguistischen Werten enthalten. Besonders bei großen Überlappungsgraden, zum Beispiel bei ü=4, ist es sinnvoll den Bedingungsteil der Regeln durch die beispielsweise im folgenden definierten Operatoren zu verkürzen und damit Speicherplatz zu sparen.
NOT *µ* (LWEᵢ) = 1-*µ* (LWEᵢ);
LNOT *µ* (LWEⱼ) = max *µ* (LWEᵢ) ; j ≠ i
INOR *µ* (LWEₖ, LWEₘ) = max *µ* (LWEⱼ); k ≤ j ≤ m
EXOR µ (LWEₖ, LWEₘ) = max *µ* (LWEⱼ) ; j ≤ k or m ≤ j

Zur Verarbeitung dieser Operatoren müssen die maximal ü getroffenen Zugehörigkeitsfunktionswerte einer Eingangsvariablen der Größe nach geordnet werden. Um nicht die Speicherplatzeinsparung durch eine Verringerung der Verarbeitungsgeschwindigkeit zu erkaufen, muß das Ordnungsverfahren innerhalb möglichst weniger Takte erfolgen. Ideal ist dabei eine Ordnung der getroffenen Zugehörigkeitsfunktionswerte inner halb eines einzigen Taktes, da hierbei das Ordnungsverfahren in jedem Fall parallel zur Fuzzifizierung erfolgen kann. Ein Ordnungsverfahren innerhalb der Zeitdauer von zwei Takten führt in der Regel jedoch ebenfalls zu keiner Geschwindigkeitseinbuße, da Fuzzy-Logic-Prozessoren unter Umständen eine Pipelinestruktur aufweisen und der zusätzliche Takt ohnehin zum Laden der Pipeline erforderlich ist.

Ein Fuzzy-Logic-Prozessor mit einer Einrichtung zur Regelauswertung für einen Überlappungsgrad ü = 4 ist beispielsweise aus der PCT-Anmeldung mit der internationalen Veröffentlichungsnummer WO 95/08797, insbesondere Figur 5, bekannt.

Die Zugehörigkeitsfunktionswerte einer Eingangsvariable der Größe nach zu ordnen um die Verarbeitungsgeschwindigkeit zu verbessern ist aus der Patentschrift US-A-5 398 299 bekannt.

Die der Erfindung zugrundeliegende Aufgabe besteht nun darin ein Ordnungsverfahren und Anordnungen zu dessen Durchführung anzugeben, bei dem, insbesondere für Überlappungsgrade ü größer oder gleich 4, Zugehörigkeitsfunktionen linguistischer Eingangswerte innerhalb einer möglichst geringen Zahl von Takten des Fuzzy-Logic-Prozessors der Größe nach geordnet werden können. Diese Aufgabe wird hinsichtlich des Verfahrens erfindungsgemäß durch die im Patentanspruch 1 angegebenen Merkmale gelöst.

Ein besonderer Vorteil der Erfindung besteht darin, daß zur Durchführung des Ordnungsverfahren, nur ein relativ geringer Schaltungsmehraufwand innerhalb eines Fuzzy-Logic-Prozessors erforderlich ist, da die hierfür erforderlichen Komponenten in einer Regelverarbeitungslogik eines Fuzzy-Logic-Prozessors ohnehin weitgehend vorhanden sind.

Weitere Ausgestaltungen des erfindungsgemäßen Verfahrens und Anordnungen zur Durchführung der Ausgestaltungen des erfindunggemäßen Verfahrens ergeben sich aus den Unteransprüchen.

Die Erfindung wird nachfolgend anhand der Zeichnungen näher erläutert. Dabei zeigt
- Figur 1: ein Blockschaltbild zur Erläuterung des erfindungsgemäßen Verfahrens,
- Figur 2: eine zweite Ausgestaltung eines Details von Figur 1 und
- Figur 3: eine dritte Ausgestaltung des Details von Figur 1.

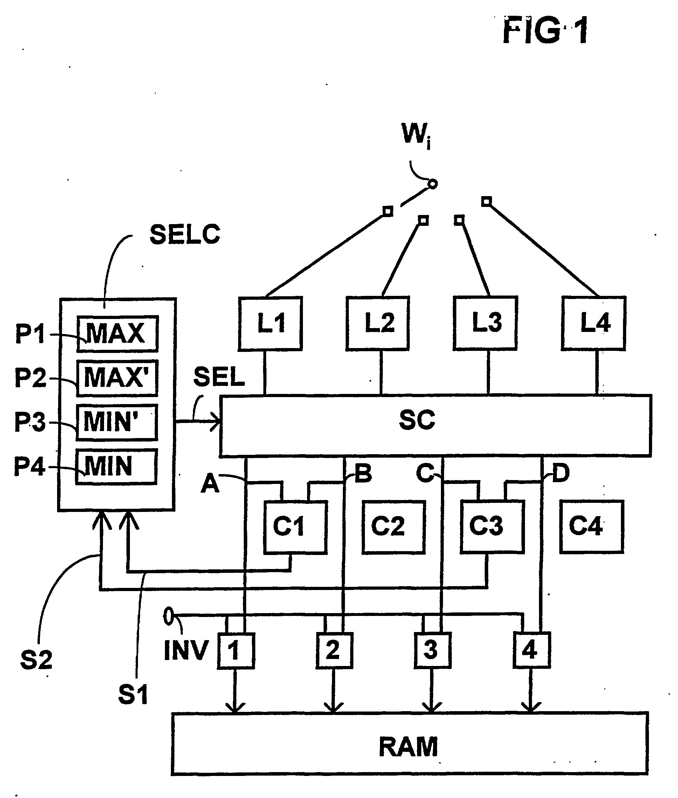

In Figur 1 ist eine erste Ausführungsform einer Anordnung zur Durchführung einer ersten Ausgestaltung des erfindungsgemäßen Ordnungsverfahrens für einen maximalen Überlappungsgrad ü = 4 gezeigt, wobei ü=4 bedeutet, daß für einen scharfen Wert einer Eingangsvariablen maximal vier Zugehörigkeitsfunktionswerte Wᵢ mit i = 1 ... 4 auftreten können. Die in Figur 1 gezeigte Anordnung besteht aus vier Haltegliedern L1 ... L4, einer Auswahlschaltung SC, Komparatoren C1 ... C4, EXOR-Schaltungen 1 ... 4, einem Speicher RAM und einer Einrichtung SELC zur Bildung eines Auswahlsignals SEL, wobei die Einrichtung SELC Positionsregister P1 ... P4 aufweist.

Die EXOR-Gatter 1 ... 4 werden zur Bildung des eingangs erwähnten NOT-Operators verwendet und können durch ein entsprechendes Invertierungssignal INV entsprechend aus- oder eingeschaltet werden. Von den in einem Fuzzy-Logic-Prozessor ohnehin vorhandenen Komparatoren werden in einer ersten Ausführungsform für einen maximalen Überlappungsgrad von ü = 4 lediglich der Komparator C1 und der Komparator C3 verwendet. Die Werte Wᵢ mit i = 1 ... 4 werden der Reihe nach innerhalb eines einzigen Prozessortaktes den Haltegliedern L1 ... L4 zugeführt. Nach jedem neu eingelesenen Wert Wᵢ werden in der Auswahlschaltung SC die Ausgänge der Halteglieder L1 ... L4 Ausgängen A ... D der Auswahlschaltung SC neu zugeordnet, die Ausgänge A und B sowie C und D jeweils mit Hilfe der Komparatoren C1 und C3 verglichen und dadurch Positionsregister P1 ... P4 innerhalb der Einrichtung SELC aktuell hinsichtlich ihres Inhalts verändert. Der Komparator C1 liefert dabei ein Steuersignal S1 und der Komparator C3 liefert ein Steuersignal S2 für die Einrichtung SELC. Das Positionsregister P1 enthält dabei einen Zeiger MAX auf das Halteglied mit dem aktuellen Maximalwert von Wᵢ und das Positionsregister P4 enthält einen Zeiger MIN auf das Halteglied mit dem aktuellen Minimalwert des Wertes Wᵢ. Das Positionsregister P2 enthält einen Zeiger MAX' auf das Halteglied mit dem nächstkleineren oder gleichen Wert als der Maximalwert von Wᵢ und das Positionsregister P3 enthält einen Zeiger MIN' auf ein Halteglied mit dem nächstgrößeren oder gleichen Wert als der Minimalwert Wᵢ. In Abhängigkeit der Positionsregister P1 ... P4 wird in der Einheit SELC das mehrere Bit breite Auswahlsignal SEL zur Steuerung der Auswahleinrichtung SC gebildet. In der ersten Ausführungsform wird dabei das aktuelle Maximum auf den Ausgang A und das aktuelle Minimum auf den Ausgang D und der aktuell eingelesene Wert Wᵢ auf die Ausgänge B und C geschaltet. In einem weiteren Prozessortakt wird ein erster Wert Wᵢ, der nicht dem maximalen oder minimalen Wert entspricht auf den Ausgang A und ein zweiter Wert von Wᵢ, der nicht dem maximalen oder minimalen Wert entspricht auf den Ausgang B geschaltet um die Zeiger MAX' und MIN' in den Positionsregistern P2 und P3 zu bestimmen und damit über die Zeiger MAX, MAX', MIN' und MIN einen geordneten Zugriff auf die Halteglieder L1 .. L4 zu ermöglichen.

Im allgemeinen Fall des erfindungsgemäßen Ordnungsverfahrens für einen maximalen Überlappungsgrad ü, werden zunächst in der Zeit eines ersten Prozessortaktes ü Zugehörigkeitsfunktionswerte der Reihe nach in ü Halteglieder (L1 ... L4) eingelesen und innerhalb des ersten Prozessortaktes aus allen ü Zugehörigkeitsfunktionswerten jeweils ein maximaler und ein minimaler Zugehörigkeitsfunktionswert dadurch bestimmt, daß jeweils aus einem bisherigen aktuellen Maximum beziehungsweise einem bisherigen aktuellen Minimum und einem aktell eingelesenen Zugehörigkeitsfunktionswert ein neues aktuelles Maximum beziehungsweise ein neues aktuelles Minimum bestimmt wird, wobei nach der Verarbeitung, d. h. hier Fuzzifizierung, aller ü Zugehörigkeitswerte ein Maximum und ein Minimum feststeht. Danach werden innerhalb einer jeweiligen k-ten Ordnungsroutine aus ü-2*k restlichen Zugehörigkeitswerten, die nicht dem Maximum oder Minimum entsprechen, jeweils ein maximaler und ein minimaler Zugehörigkeitsfunktionswert dadurch bestimmt, daß gleichzeitig jeweils aus einem bisherigen aktuellen Maximum beziehungsweise einem bisherigen aktuellen Minimum und einem innerhalb dieser Ordnungsroutine noch nicht berücksichtigten gespeicherten Zugehörigkeitsfunktionswert ein neues aktuelles Maximum beziehungsweise ein neues aktuelles Minimum bestimmt wird, wobei nach der Verarbeitung aller ü-2*k Zugehörigkeitswerte ein k+1-tes Maximum und ein k+1-tes Minimum feststeht. Dies wird so oft wiederholt, bis entweder nur noch ein oder zwei Zugehörigkeitswerte übrig sind. Schließlich werden, sofern ü geradzahlig ist, in einem letzten Prozessortakt aus den beiden letzten Zugehörigkeitsfunktionswerten ein letztes Maximum und ein letztes Minimum gebildet.

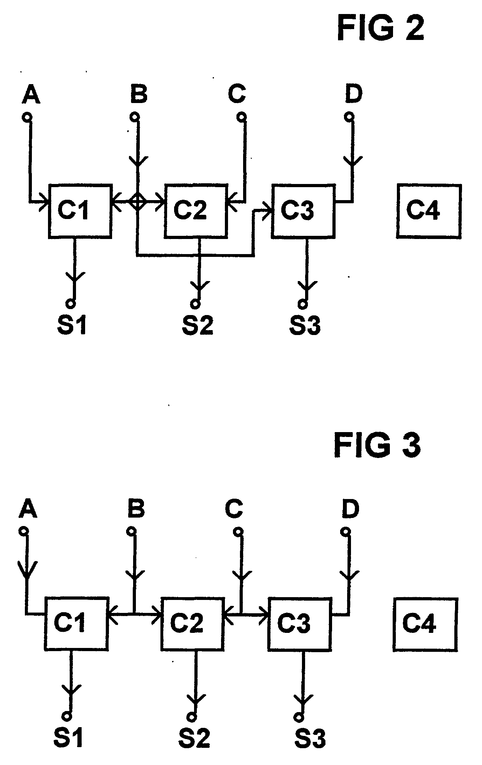

In einer zweiten Ausführungsform der Anordnung zur Durchführung einer zweiten Ausgestaltung des erfindungsgemäßen Verfahrens für einen maximalen Überlappungsgrad ü = 4 werden im Vergleich zur ersten Ausführungsform lediglich anstelle von zwei Komparatoren die drei Komparatoren C1, C2 und C3 verwendet und dabei unterschiedlich zur vorherigen Ausführungsform mit den Ausgängen A ... D beschaltet. Wie in Figur 2 gezeigt, ist ein erster Eingang des Komparators C1 mit dem Ausgang A und ein zweiter Eingang des Komparators C1 mit dem Ausgang B beschaltet. Der Ausgang B ist darüber hinaus mit einem ersten Eingang des Komparators C2 und einem ersten Eingang des Komparators C3 verbunden. Ein zweiter Eingang des Komparators C2 ist mit dem Ausgang C verbunden und ein zweiter Eingang des Komparators C3 ist mit dem Ausgang D verbunden. Ein für einen Fuzzy-Logic-Prozessor mit maximalem Überlappungsgrad ü = 4 vorhandener weiterer Komparator C4 bleibt unbenutzt.

Diese zweite Ausführungsform eignet sich für eine zweite Ausgestaltung des erfindungsgemäßes Ordnungsverfahren, bei dem ebenso maximal vier Zugehörigkeitsfunktionswert geordnet werden. Der Vorteil hierbei ist, daß die vier Zugehörigkeitsfunktionswerte bereits nach einem einzigen Prozessortakt geordnet vorliegen. Zur Durchführung des Verfahrens wird jeweils auf den Ausgang A der aktuelle Maximalwert von Wᵢ, der aktuelle Minimalwert von Wᵢ auf den Ausgang C und der aktuell eingelesene Wert Wᵢ auf den Ausgang B geschaltet. Beim Einlesen des vierten Wertes W₄ wird dabei der dritte Wert W₃, der nach drei Werten nicht dem bis dahin gültigem Maximum oder Minimum entsprach, auf den Ausgang D geschaltet und die Positionsregister P1 ... P4 haben bereits innerhalb eines einzigen Prozessortaktes ihre endgültige Zeigerbelegung, das heißt auf die Inhalte der Halteglieder L1 ... L4 kann ab diesem Zeitpunkt geordnet zugegriffen werden. Ein geordneter Zugriff bedeutet wie oben, daß beispielsweise zuerst das Halteglied mit dem Maximalwert und in fallender Reihenfolge alle weiteren Halteglieder ausgelesen werden.

In Figur 3 ist eine Anordnung zur Durchführung des erfindungsgemäßen Verfahrens für einen maximalen Überlappungsgrad von ü = 5 gezeigt. Die Anordnung unterscheidet sich, abgesehen von einem zusätzlichen Positionsregister P5 für einen zusätzlichen Zeiger MAX'' und einer größeren Wortbreite des Positionsregisters, von der Anordnung in Figur 2 lediglich darin, daß der erste Eingang des Komparators C3 nicht mit dem Ausgang B, sondern mit dem Ausgang C beschaltet ist. Beim erfindungsgemäßen Verfahren für einen maximalen Überlappungsgrad ü = 5 wird zunächst wie bei der ersten Variante des erfindungsgemäßen Verfahrens mit einem Überlappungsgrad ü = 4 der Zeiger MAX und der Zeiger MIN bzw. die Halteglieder die den Maximalwert von Wᵢ und den Minimalwert von Wᵢ aufweisen, ermittelt. Daraufhin wird in einem weiteren Prozessortakt ein erster Wert, der nicht dem Maximalwert oder dem Minimalwert entspricht, auf den Ausgang A und den Ausgang D, ein zweiter Wert, der nicht dem maximalen oder minimalen Wert entspricht auf den Ausgang B und ein dritter Wert, der nicht dem maximalen und minimalen Wert entspricht auf den Ausgang C geschaltet. Die in den Komparatoren C1 ... C3 gebildeten Steuersignale S1 ... S3 bewirken eine korrekte Zuordnung der weiteren Zeiger.

Im folgenden ist beispielhaft das erfindungsgemäße Verfahren für einen Überlappungsgrad ü = 5 in Form von zwei Tabellen dargestellt. Die Zugehörigkeitsfunktionswerte Wi sind ungeordnet und sollen in diesem Beispiel der Ungleichung W₅ < W₄ < W₁ < W₂ < W₃ genügen. Die Eintragung "X" bedeutet beliebig.

| L1 | L2 | L3 | L4 | L5 | A | B | C | D | P1 | P2P4 | P5 |
|---|---|---|---|---|---|---|---|---|---|---|---|
| W₁ | X | X | X | X | W₁ | X | W₁ | X | 10000 | XXX | 10000 |
| W₁ | W₂ | X | X | X | W₁ | W₂ | W₁ | X | 01000 | XXX | 10000 |
| W₁ | W₂ | W₃ | X | X | W₂ | W₃ | W₁ | X | 00100 | XXX | 10000 |
| W₁ | W₂ | W₃ | W₄ | X | W₃ | W₄ | W₁ | X | 00100 | XXX | 00010 |
| W₁ | W₂ | W₃ | W₄ | W₅ | W₃ | W₅ | W₄ | X | 00100 | XXX | 00001 |
| W₁ | W₂ | W₃ | W₄ | W₅ | W₁ | W₂ | W₄ | W₁ | 00100 | XXX | 00001 |

Nach dem fünften Schritt ist das Halteglied mit dem Maximalwert über dem Positionszeiger MAX und das Halteglied mit dem Minimalwert über dem Positionzeiger MIN bestimmt. Hier im Beispiel wird der Maximalwert im Halteglied L3 über die logische Eins im Zeiger MAX = 00100 und das Minimum im Halteglied L5 durch den Zeiger MIN = 00001 angezeigt. Im nächsten Schritt sind noch die drei Werte W₁, W₂ und W₄ zu vergleichen. Dies läuft wie folgt ab: Wird beispielsweise das Steuersignal 1 durch den Vergleich A > B, das Steuersignal 2 durch den Vergleich B > C und das Steuersignal S3 durch den Vergleich C > D gebildet, heißt in der nachfolgenden Tabelle eine "Eins", daß die jeweilige Größerbedingung erfolgt ist.

| S1 | S2 | S3 | Bedeutung | P2 | P3 | P4 | Beispiel |
|---|---|---|---|---|---|---|---|
| A > B | B > C | C > D | | MAX' | MAX'' | MIN' | |
| 0 | 0 | X | W_{A}≤W_{B}≤W_{C} | 00X1X | 01X0X | 10X0X | W₁≤W₂≤W₄ |
| 1 | 1 | X | W_{A}>W_{B}>W_{C} | 10X0X | 01X0X | 00X1X | W₁>W₂>W₄ |
| 0 | 1 | 0 | W_{C}≤W_{A}≤W_{B} | 01X0X | 10X0X | 00X1X | W₄≤W₁≤W₂ |
| 0 | 1 | 1 | W_{B}>W_{C}>W_{A} | 01X0X | 00X1X | 10X0X | W₂>W₄>W₁ |
| 1 | 0 | 0 | W_{B}≤W_{C}≤W_{A} | 10X0X | 00X1X | 01X0X | W₂≤W₄≤W₁ |
| 1 | 0 | 1 | W_{C}>W_{A}>W_{B} | 00X1X | 10X0X | 01X0X | W₄>W₁>W₂ |

Die Zuordnung zwischen den Ausgängen A ... D und den Eingängen der Komparatoren muß bei keiner Ausführungsform fest verdrahtet sein, sondern kann durch Schalter bzw. Multiplexer bewirkt werden, wodurch die Anordnung sowohl zur Durchführung des erfindungsgemäßen Ordnungsverfahrens als auch zur Regelauswertung benutzt werden kann.

Vorteilhafterweise weisen die ü Positionsregister P1, P2 ... jeweils eine Wortbreite von ü Bit auf und ein jeweiliges Halteglied ist bitsignifikant durch eine logische Eins an einer entsprechenden Stelle im Positionsregister markiert.

## Patentansprüche

1. Ordnungsverfahren für ü Zugehörigkeitsfunktionswerte (Wi) linguistischer Eingangswerte (LWEi) in einem Fuzzy-Logik-Prozessor, mit ü ≥ 4,
- bei dem innerhalb der Zeit eines Prozessortaktes die Zugehörigkeitsfunktionswerte (Wi) der Reihe nach in Halteglieder (L1 ... L4) eingelesen werden und nach jedem neu eingegebenen Zugehörigkeitsfunktionswert (Wi) die Ausgänge der Halteglieder mit Hilfe einer Auswahleinrichtung (SC) auf in Abhängigkeit eines aktuellen Auswahlsignales (SEL) bestimmte Ausgänge (A ... D) der Auswahleinrichtung (SC) durchgeschaltet werden,
- bei dem die Signale an den Ausgängen (A ... D) der Auswahleinrichtung (SC) in Komparatoren (C1, C2, C3) verglichen werden und daraus Steuersignale (S1 ... S3) für eine Einheit (SELC) zur Bildung eines neuen Auswahlsignales (SEL) erzeugt werden, und
- bei dem mit Hilfe der Steuersignale (S1 ... S3) Zeiger (MAX, MAX', MAX'', MIN', MIN) in Positionsregister (P1 ... P5) derart eingeschrieben werden, daß die Zeiger einen geordeten Zugriff auf die Zugehörigkeitsfunktionswerte (Wi) in den Haltegliedern (L1 ... L4) ermöglichen.

2. Verfahren nach Anspruch 1,
- bei dem in der Zeit eines ersten Prozessortaktes ü Zugehörigkeitsfunktionswerte der Reihe nach in ü Halteglieder (L1 ... L4) eingelesen werden und aus allen ü Zugehörigkeitsfunktionswerten jeweils ein maximaler und ein minimaler Zugehörigkeitsfunktionswert dadurch bestimmt wird, daß jeweils aus einem bisherigen aktuellen Maximum beziehungsweise einem bisherigen aktuellen Minimum und einem aktuell eingelesenen Zugehörigkeitsfunktionswert ein neues aktuelles Maximum beziehungsweise ein neues aktuelles Minimum bestimmt wird, wobei nach der Verarbeitung aller ü Zugehörigkeitsfunktionswerte ein erstes Maximum und ein erstes Minimum feststeht,
- bei dem innerhalb eines jeweiligen folgenden k-ten Prozessortaktes, wobei k größer oder gleich 1 ist, aus ü-2*k restlichen Zugehörigkeitswerten, die nicht dem Maximum oder Minimum entsprechen, jeweils ein maximaler und ein minimaler Zugehörigkeitsfunktionswert dadurch bestimmt wird, daß gleichzeitig jeweils aus einem bisherigen aktuellen Maximum beziehungsweise einem bisherigen aktuellen Minimum und einem innerhalb dieses Prozessortaktes noch nicht berücksichtigten gespeicherten Zugehörigkeitsfunktionswert ein neues aktuelles Maximum beziehungsweise ein neues aktuelles Minimum bestimmt wird, wobei nach der Verarbeitung aller ü-2*k restlichen Zugehörigkeitsfunktionswerte ein k+1-tes Maximum und ein k+1-tes Minimum feststeht,
- bei dem der vorhergehende Schritt, falls erforderlich, innerhalb eines oder mehrerer jeweiliger weiterer folgender Prozessortakte so oft wiederholt wird, bis entweder nur noch ein oder zwei restliche Zugehörigkeitsfunktionswerte übrig sind und
- bei dem, sofern ü geradzahlig ist, in einem letzten Prozessortakt aus den beiden letzten Zugehörigkeitsfunktionswerten ein letztes Maximum und ein letztes Minimum gebildet wird.

3. Verfahren nach Anspruch 2,
- bei dem in der Zeit eines ersten Prozessortaktes vier Zugehörigkeitsfunktionswerte der Reihe nach in vier Halteglieder (L1 ... L4) eingelesen werden,
- bei dem für alle Zugehörigkeitsfunktionswerte jeweils der aktuelle maximale Zugehörigkeitsfunktionswert auf einen ersten Ausgang (A), der aktuelle minimale Zugehörigkeitsfunktionswert auf einen vierten Ausgang (D) und der aktuell eingelesene Zugehörigkeitsfunktionswert auf einen zweiten und dritten Ausgang (B, C) der Auswahleinrichtung (SC) geschaltet werden,
- bei dem in einem zweiten Prozessortakt der vorletzte Zugehörigkeitsfunktionswert auf einen ersten Ausgang (A) und der letzte Zugehörigkeitsfunktionswert auf den zweiten Ausgang (B) geschaltet wird und
- bei dem mit Hilfe eines ersten der Komparatoren ein weiteres Steuersignal (S1) gebildet wird und mit Hilfe des weiteren Steuersignals weitere Zeiger in Positionsregister (P2, P3) derart eingeschrieben werden, daß ein erster weiterer Zeiger auf ein Halteglied mit einem zum maximalen Zugehörigkeitsfunktionswert nächstkleineren oder gleichen Zugehörigkeitsfunktionswert und daß ein zweiter weiterer Zeiger auf ein Halteglied mit einem zum minimalen Zugehörigkeitsfunktionswert nächstgrößeren oder gleichen Zugehörigkeitsfunktionswert zeigen.

4. Verfahren nach Anspruch 1,
- bei dem in der Zeit eines Prozessortaktes vier Zugehörigkeitsfunktionswerte der Reihe nach in vier Halteglieder (L1 ... L4) eingelesen werden,
- bei dem für alle Zugehörigkeitsfunktionen der Reihe nach der aktuelle maximale Zugehörigkeitsfunktionswert jeweils auf den ersten Ausgang (A), der aktuelle minimale Zugehörigkeitsfunktionswert jeweils auf den dritten Ausgang (C) und der aktuell eingelesene Zugehörigkeitsfunktionswert auf den zweiten Ausgang (B) der Auswahleinrichtung (SC) geschaltet wird und
- bei dem beim Einlesen des vierten Zugehörigkeitsfunktionswertes der dritte Zugehörigkeitsfunktionswert auf den vierten Ausgang (D) der Auswahleinrichtung (SC) geschaltet wird.

5. Verfahren nach Anspruch 1,
- bei dem in der Zeit eines ersten Prozessortakts fünf Zugehörigkeitsfunktionswerte der Reihe nach in fünf Halteglieder (L1 ... L5) eingelesen werden,
- bei dem für alle fünf Zugehörigkeitsfunktionswerte der aktuelle maximale Zugehörigkeitsfunktionswert jeweils auf einen ersten Ausgang (A), der aktuelle minimale Zugehörigkeitsfunktionswert auf einen vierten Ausgang (D) und der aktuell eingelesene Zugehörigkeitsfunktionswert auf einen zweiten und dritten Ausgang (B, C) der Auswahleinrichtung (SC) geschaltet wird,
- bei dem mit Hilfe der Komparatoren ein maximaler Zugehörigkeitsfunktionswert und ein minimaler Zugehörigkeitsfunktionswert festgelegt wird,
- bei dem in der Zeit eines weiteren Prozessortakts ein erster Zugehörigkeitsfunktionswert, der nicht dem maximalen Zugehörigkeitsfunktionswert oder dem minimalen Zugehörigkeitsfunktionswert entspricht, auf einen ersten Ausgang (A) und vierten Ausgang (D), ein zweiter Zugehörigkeitsfunktionswert, der nicht dem maximalen Zugehörigkeitsfunktionswert oder dem minimalen Zugehörigkeitsfunktionswert entspricht, auf den zweiten Ausgang (B) und ein dritter Zugehörigkeitsfunktionswert, der nicht dem maximalen Zugehörigkeitsfunktionswert oder dem minimalen Zugehörigkeitsfunktionswert entspricht, auf den dritten Ausgang (C) geschaltet wird,
- bei dem die Signale der ersten und zweiten Ausgänge (A, B), die Signale der zweiten und dritten Ausgänge (B, C) und die Signale der dritten und vierten Ausgänge (C, D) verglichen und abhängig davon drei Steuersignale (S1, S2, S3) gebildet werden und
- bei dem durch die drei Steuersignale drei weitere Zeiger derart in drei weitere Positionsregister (P2, P3, P4) eingespeichert werden, daß die Zeiger (MAX', MAX'', MIN') auf Halteglieder mit Zugehörigkeitsfunktionswerten zeigen, die nicht der maximale Zugehörigkeitsfunktionswert oder der minimale Zugehörigkeitsfunktionswert sind, und einen der Größe nach geordneten Zugriff auf diese Zugehörigkeitsfunktionswerte ermöglichen.

6. Anordnung die Mittel enthält um das Verfahren nach Anspruch 2 durchzuführen,
- bei der der erste Ausgang (A) mit einem ersten Eingang des ersten Komparators (C1) und der zweite Ausgang (B) mit einem zweiten Eingang des ersten Komparators (C1) verbindbar oder dauerhaft verbunden ist, welcher erste Komparator (C1) das Steuersignal (S1) liefert, und
- bei der der dritte Ausgang (C) mit einem ersten Eingang des dritten Komparators (C3) und ein vierter Ausgang (D) mit einem zweiten Eingang des dritten Komparators (C3) verbindbar oder dauerhaft verbunden ist, welcher dritte Komparator (C3) das Steuersignal (S2) liefert.

7. Anordnung zur Durchführung des Verfahrens nach Anspruch 3,
- bei der der erste Ausgang (A) mit einem ersten Eingang des ersten Komparators (C1), ein zweiter Ausgang (B) mit einem zweiten Eingang des ersten Komparators (C1), einem ersten Eingang des zweiten Komparators (C2) und einem ersten Eingang des dritten Komparators (C3) verbindbar oder dauerhaft verbunden ist,
- bei dem der dritte Ausgang (C) mit einem zweiten Eingang des zweiten Komparators (C2) und ein vierter Eingang (D) mit einem zweiten Eingang des dritten Komparators (C3) verbindbar oder dauerhaft verbunden ist und
- bei dem der erste Komparator (C1) ein erstes Steuersignal (S1), der zweite Komparator (C2) ein zweites Steuersignal (S2) und der dritte Komparator (C3) ein drittes Steuersignal (S3) bildet.

8. Anordnung zur Durchführung des Verfahrens nach Anspruch 4,
- bei der der erste Ausgang (A) mit einem ersten Eingang des ersten Komparators (C1) verbindbar oder dauerhaft verbunden ist,
- bei der ein zweiter Eingang (B) mit einem zweiten Eingang eines ersten Komparators (C1) und einem ersten Eingang eines zweiten Komparators (C2) verbindbar oder dauerhaft verbunden ist,
- bei der der dritte Ausgang (C) mit einem zweiten Eingang des zweiten Komparators (C2) und einem ersten Eingang eines dritten Komparators (C3) verbindbar oder dauerhaft verbunden ist,
- bei der der vierte Ausgang (D) mit einem zweiten Eingang des dritten Komparators (C3) verbindbar oder dauerhaft verbunden ist und
- bei der der erste Komparator (C1) ein erstes Steuersignal (S1), der zweite Komparator (C2) ein zweites Steuersignal (S2) und der dritte Komparator (C3) ein drittes Steuersignal (S3) erzeugt.

9. Anordnung nach einem der Ansprüche 5 bis 7,
bei der je ein Positionsregister (P1 ... P5) für den größten Zugehörigkeitsfunktionswerte Zeiger MAX), den nächstgrößten (Zeiger MAX') bis hin zum kleinsten (Zeiger MIN) aller innerhalb eines Prozessortakts einzulesenden Zugehörigkeitsfunktionswerte vorgesehen ist, wobei die Wortbreite der Positionsregister (P1 ... P5) jeweils der Anzahl der maximal einzulesenden Zugehörigkeitsfunktionswerte entspricht und durch eine logische Eins an der entsprechenden Stelle im jeweiligen Positionsregister das Halteglied, das den Zugehörigkeitsfunktionswert enthält, bitsignifikant markiert ist.

## Claims

1. Ranking method for ü membership function values (Wi) of linguistic input values (LWei) in a fuzzy logic processor, where ü is ≥ 4,
- in which during the time of a processor cycle the membership function values (Wi) are entered in sequence into holding elements (L1 ..... L4), and after each newly entered membership function value (Wi) the outputs of the holding elements are switched through with the aid of a selection device (SC) to outputs (A ... D) of the selection device (SC) which are determined as a function of a current selection signal (SEL),
- in which the signals at the outputs (A ... D) of the selection device (SC) are compared in comparators (C1, C2, C3), and control signals (S1 ... S3) are generated therefrom for a unit (SELC) for forming a new selection signal (SEL), and
- in which pointers (MAX, MAX', MAX", MIN', MIN) are written into position registers (P1 ... P5) with the aid of the control signals (S1 ... S3) in such a way that the pointers permit an ordered access to the membership function values (Wi) in the holding elements (L1 ... L4).

2. Method according to Claim 1,
- in which ü membership function values are entered in sequence into ü holding elements (L1 ... L4) in the time of a first processor cycle, and a maximum and a minimum membership function value are determined in each case from all ü membership function values by in each case determining a new current maximum or a new current minimum from a previously current maximum or a previously current minimum and a currently entered membership function value, a first maximum and a first minimum being fixed after the processing of all ü membership function values,
- in which, within a respective following kth processor cycle, k being greater than or equal to 1, in each case a maximum and a minimum membership function value is determined from ü-2*k remaining membership values which do not correspond to the maximum or minimum by determining a new current maximum or a new current minimum simultaneously in each case from a previous current maximum or a previous current minimum and a stored membership function value not yet taken into account within this processor cycle, a k+1th maximum and a k+1th minimum being fixed after the processing of all ü-2*k remaining membership function values,
- in which, if required, the preceding step is repeated within one or more respective further following processor cycles until either only still one or two remaining membership function values remain, and
- in which, if ü is even, a last maximum and a last minimum are formed in a last processor cycle from the two last membership function values.

3. Method according to Claim 2,
- in which four membership function values are entered in sequence into four holding elements (L1 ... L4) in the time of a first processor cycle,
- in which for all membership function values in each case the current maximum membership function value is switched to a first output (A), the current minimum membership function value is switched to a fourth output (D), and the currently entered membership function value is switched to a second and third output (B, C) of the selection device (SC),
- in which in a second processor cycle the last but one membership function value is switched to a first output (A), and the last membership function value is switched to the second output (B), and
- in which with the aid of a first one of the comparators a further control signal (S1) is formed and, with the aid of the further control signal, further pointers are written into position registers (P2, P3) in such a way that a first further pointer points to a holding element with a membership function value which is the next smaller or equal to the maximum membership function value, and in that a second further pointer points to a holding element with a membership function value which is next larger to or equal to the minimum membership function value.

4. Method according to Claim 1,
- in which four membership function values are entered in sequence into four holding elements (L1 ... L4) in the time of one processor cycle,
- in which, in sequence for all membership functions, the current maximum membership function value is respectively switched to the first output (A), the current minimum membership function value is respectively switched to the third output (C), and the currently entered membership function value is switched to the second output (B) of the selection device (SC), and
- in which when the fourth membership function value is being entered the third membership function value is switched to the fourth output (D) of the selection device (SC).

5. Method according to Claim 1,
- in which five membership function values are entered in sequence into five holding elements (L1 ... L5) in the time of a first processor cycle,
- in which for all five membership function values the current maximum membership function value is respectively switched to a first output (A), the current minimum membership function value is switched to a fourth output (D), and the currently entered membership function value is switched to a second and third output (B, C) of the selection device (SC),
- in which a maximum membership function value and a minimum membership value are fixed with the aid of the comparators,
- in which in the time of a further processor cycle a first membership function value which does not correspond to the maximum membership function value or the minimum membership function value is switched to a first output (A) and fourth output (D), a second membership function value, which does not correspond to the maximum membership function value or the minimum membership function value, is switched to the second output (B), and a third membership function value, which does not correspond to the maximum membership function value or the minimum membership function value, is switched to the third output (C),
- in which the signals of the first and second outputs (A, B), the signals of the second and third outputs (B, C), and the signals of the third and fourth outputs (C, D), are compared and three control signals (S1, S2, S3) are formed as a function thereof, and
- in which three further pointers are stored in three further position registers (P2, P3, P4) by the three control signals in such a way that the pointers (MAX', MAX'', MIN') point to holding elements with membership function values which are not the maximum membership function value or the minimum membership function value, and permit access to these membership function values which is ordered in terms of size.

6. Arrangement which contains means for carrying out the method according to Claim 2,
- in which the first output (A) can be connected, or is permanently connected to a first input of the first comparator (C1), and the second output (B) can be connected, or is permanently connected to a second input of the first comparator (C1), which first comparator (C1) supplies a control signal (S1), and
- in which the third output (C), can be connected, or is permanently connected to a first input of the third comparator (C3), and a fourth output (D) can be connected, or is permanently connected to a second input of the third comparator (C3), which third comparator (C3) supplies the control signal (S2).

7. Arrangement for carrying out the method according to Claim 3,
- in which the first output (A) can be connected, or is permanently connected to a first input of the first comparator (C1), a second output (B) can be connected, or is permanently connected to a second input of the first comparator (C1), a first input of the second comparator (C2) and a first input of the third comparator (C3),
- in which the third output (C) can be connected, or is permanently connected to a second input of the second comparator (C2), and a fourth input (D) can be connected, or is permanently connected to a second input of the third comparator (C3), and
- in which the first comparator (C1) forms a first control signal (S1), the second comparator (C2) forms a second control signal (S2), and the third comparator (C3) forms a third control signal (S3).

8. Arrangement for carrying out the method according to Claim 4,
- in which the first output (A) can be connected, or is permanently connected to a first input of the first comparator (C1),
- in which a second input (B) can be connected, or is permanently connected to a second input of a first comparator (C1) and a first input of a second comparator (C2),
- in which the third output (C) can be connected, or is permanently connected to a second input of the second comparator (C2) and a first input of a third comparator (C3),
- in which the fourth output (D) can be connected, or is permanently connected to a second input of the third comparator (C3), and
- in which the first comparator (C1) generates a first control signal (S1), the second comparator (C2) generates a second control signal (S2), and the third comparator (C3) generates a third control signal (S3).

9. Arrangement according to one of Claims 5 - 7, in which one position register (P1 ... P5) each is provided for the largest membership function value (pointer MAX), the next largest (pointer MAX') and down to the smallest (pointer MIN) of all membership function values to be entered within a processor cycle, the word length of the position registers (P1 ... P5) corresponding in each case to the number of the membership function values which are to be entered at most, and the holding element which contains the membership function value being marked in a bit-significant fashion by a logic one at the corresponding point in the respective position register.

## Revendications

1. Procédé de classement pour ü valeurs (Wᵢ) de fonctions d'appartenance de valeurs (LWEᵢ) d'entrée linguistiques dans un processeur à logique floue, avec ü ≥ 4,
- dans lequel les valeurs (Wᵢ) de fonctions d'appartenance sont entrées les unes après les autres dans des organes (L1 ... L4) de maintien pendant la durée d'une cadence du processeur et dans lequel, après chaque valeur (Wᵢ) de fonctions d'appartenance nouvellement entrée, les sorties des éléments de maintien sont, à l'aide d'un dispositif (SC) de sélection, interconnectées sur des sorties (A ... D). du dispositif (SC) de sélection déterminées en fonction d'un signal (SEL) de sélection du moment,
- dans lequel les signaux sur les sorties (A ... D) du dispositif (SC) de sélection sont comparés dans des comparateurs (C1, C2, C3) et dans lequel des signaux (S1 ... S3) de commande pour une unité (SELC) sont produits pour former un nouveau signal (SEL) de sélection, et
- dans lequel il est écrit à l'aide des signaux (S1 ... S3) de commande des pointeurs (MAX, MAX', MAX", MIN', MIN) dans des registres (P1 ... P5) de position de telle manière que les pointeurs permettent un accès en ordre aux valeurs (Wᵢ) de fonctions d'appartenance dans les éléments (L1 ... L4) de maintien.

2. Procédé suivant la revendication 1,
- dans lequel il est entré au temps d'une première cadence de processeur ü valeurs de fonctions d'appartenance les unes après les autres dans ü organes (L1 ... L4) de maintien et dans lequel il est déterminé à partir de toutes les ü valeurs de fonctions d'appartenance une valeur maximale et une valeur minimale de fonctions d'appartenance par le fait qu'il est déterminé chaque fois à partir d'un maximum du moment présent jusqu'ici et d'un minimum du moment présent jusqu'ici et d'une valeur de fonctions d'appartenance entrée sur le moment un nouveau maximum du moment et un nouveau minimum du moment, un premier maximum et un premier minium étant établis après le traitement de toutes les ü valeurs de fonctions d'appartenance,
- dans lequel il est déterminé en l'espace d'une k^{ème} cadence de processeur associée, k ≥ 1, à partir des ü - 2 * k valeurs d'appartenance restantes, qui ne correspondent pas au maximum ou au..minimum, chaque fois une valeur maximale et une valeur minimale de fonctions d'appartenance par le fait qu'il est déterminé en même temps à partir d'un maximum du moment présent jusqu'ici et d'un minimum du moment présent jusqu'ici et d'une valeur de fonctions d'appartenance. enregistrée, non encore prise en compte pendant cette cadence de processeur, un nouveau maximum du moment et un nouveau minimum du moment, un k + 1^{ème} maximum et k + 1^{ème} minimum étant établis après le traitement de tous les ü - 2 * k valeurs de fonctions d'appartenance restantes,
- dans lequel l'étape précédente est, dans le cas où cela est nécessaire répétée durant une ou plusieurs cadences de processeur suivantes supplémentaires autant de fois qu'il est nécessaire pour qu'il ne reste plus qu'une ou deux valeurs de fonctions d'appartenance restantes et
- dans lequel, dans la mesure où ü est pair, il est formé lors d'une dernière cadence du processeur, à partir des deux dernières valeurs de fonctions d'appartenance, un dernier maximum et un dernier minimum.

3. Procédé suivant la revendication 3,
- dans lequel il est entré au temps d'une première cadence de processeur quatre valeurs de fonctions d'appartenance les unes après les autres dans quatre organes (L1 ... L4) de maintien,
- dans lequel, pour toutes les valeurs de fonctions d'appartenance, la valeur de fonctions d'appartenance maximale du moment est branchée sur une première sortie (A), la valeur de fonctions d'appartenance minimale du moment est branchée sur une quatrième sortie (D) et la valeur de fonctions d'appartenance entrée sur le moment est branchée sur une deuxième et une troisième sortie (B, C) du dispositif (SC) de sélection,
- dans lequel, lors d'une deuxième cadence de processeur, l'avant dernière valeur de fonctions d'appartenance est branchée sur une première sortie (A) et la dernière valeur de fonctions d'appartenance est branchée sur la deuxième sortie (B) et
- dans lequel il est formé à l'aide d'un premier des comparateurs un signal (S1) de commande supplémentaire et dans lequel il est écrit à l'aide du signal de commande supplémentaire des pointeurs supplémentaires dans des registres (P2, P3) de position de telle manière qu'un premier pointeur supplémentaire est pointé sur un élément de maintien ayant une valeur de fonctions d'appartenance qui est la valeur inférieure à la valeur de la fonction d'appartenance maximale la plus proche de celle-ci ou qui est égale à celle-ci et en ce qu'un deuxième pointeur supplémentaire pointe sur un organe de maintien ayant une valeur de fonctions d'appartenance qui est la valeur supérieure à la valeur de la fonction d'appartenance minimale la plus proche de celle-ci ou qui est égale à celle-ci.

4. Procédé. suivant la revendication 1,
- dans lequel il est entré au temps d'une cadence de processeur quatre valeurs de fonctions d'appartenance les unes après les autres dans quatre organes (L1 ... L4) de maintien,
- dans lequel, pour toutes les fonctions d'appartenance, successivement, la valeur de fonctions d'appartenance maximale du moment est branchée sur la première sortie (A), la valeur de fonctions d'appartenance minimale du moment est branchée sur la troisième sortie (C) et la valeur de fonctions d'appartenance entrée sur le moment est branchée sur la deuxième sortie (B) du dispositif (SC) de sélection et
- dans lequel, lors de la lecture de la quatrième valeur de fonctions d'appartenance, la troisième valeur de fonctions d'appartenance est branchée sur la quatrième sortie du dispositif (SC) de sélection.

5. Procédé suivant la revendication 1,
- dans lequel il est entré au temps d'une première cadence de processeur cinq valeurs de fonctions d'appartenance les unes après les autres dans cinq organes (L1 ... L5) de maintien,
- dans lequel, pour toutes les cinq valeurs de fonctions d'appartenance, la valeur de fonctions d'appartenance maximale du moment est branchée sur une première sortie (A), la valeur de fonctions d'appartenance minimale du moment est branchée sur quatrième sortie (D) et la valeur de fonctions d'appartenance entrée sur le moment est branchée sur une deuxième et une troisième sortie (B, C) du dispositif de sélection,
- dans lequel il est fixé à l'aide des comparateurs une valeur de fonctions d'appartenance maximale et une valeur de fonctions d'appartenance minimale,
- dans lequel il est branché au temps d'une cadence de processeur supplémentaire une première valeur de fonctions d'appartenance, qui ne correspond pas à la valeur de fonctions d'appartenance maximale ou à la valeur de fonctions d'appartenance minimale, sur une première sortie (A) et une quatrième sortie (D), une deuxième valeur de fonctions d'appartenance, qui ne correspond pas à la valeur de fonctions d'appartenance maximale ou à la valeur de fonctions d'appartenance minimale, sur la deuxième sortie (B) et une troisième valeur de fonctions d'appartenance, qui ne correspond pas à la valeur de fonctions d'appartenance maximale ou à la valeur de fonctions. d'appartenance minimale; sur la troisième sortie (C),
- dans lequel les signaux des première et deuxième sorties (A, B), les signaux des deuxième et troisième sorties (B, C) et les signaux des troisième et quatrième sorties (C, D) sont comparés et il est formé en fonction de ces comparaisons trois signaux (S1, S2; S3) de commande et
- dans lequel il est mis en mémoire par les trois signaux de commande trois pointeurs supplémentaires dans trois registres (P2, P3, P4) de position de telle manière que les pointeurs (MAX', MAX", MIN') indiquent des organes de maintien comportant des valeurs de fonctions d'appartenance qui ne sont pas la valeur de fonctions d'appartenance maximale ou la valeur de fonctions d'appartenance minimale et permettent un accès ordonné suivant la grandeur à ces valeurs de fonctions d'appartenance.

6. Dispositif qui contient des moyens pour mettre en oeuvre le procédé suivant la revendication 2,
- dans lequel la première sortie (A) peut être reliée ou est reliée durablement à une première entrée du premier comparateur (C1) et la deuxième sortie (B) peut être reliée ou est reliée durablement à une deuxième entrée du premier comparateur (C1), ce premier comparateur (C1) fournissant le signal (S1) de commande, et
- dans lequel la troisième sortie (C) peut être reliée ou est reliée durablement à une première entrée du troisième comparateur (C3) et une quatrième sortie (D) peut être reliée ou est reliée durablement à une deuxième entrée du troisième comparateur (C3), ce troisième comparateur (C3) fournissant le signal (S2) de commande.

7. Dispositif de mise en oeuvre du procédé suivant la revendication 3,
- dans lequel la première sortie (A) peut être reliée ou est reliée durablement à une première entrée du premier comparateur (C1), une deuxième sortie (B) peut être reliée ou est reliée durablement à une deuxième entrée du premier comparateur (C1), à une première entrée du deuxième comparateur (C2) et à une première entrée du troisième comparateur (C3),
- dans lequel la troisième sortie (C) peut être reliée ou est reliée durablement à une deuxième entrée du deuxième comparateur (C2) et une quatrième entrée (D) peut être reliée ou est reliée durablement à une. deuxième entrée du troisième comparateur (C3) et
- dans lequel le premier comparateur (C1) forme un premier signal (S1) de commande, le deuxième comparateur (C2) forme un deuxième signal (S2) de commande et le troisième comparateur (C3) forme un troisième signal (S3) de commande.

8. Dispositif de mise en oeuvre du procédé suivant la revendication 4,
- dans lequel la première sortie (A) peut être reliée ou est reliée durablement à une première entrée du premier comparateur (C1),
- dans lequel une deuxième entrée (B) peut être reliée ou est reliée durablement à une deuxième entrée d'un premier comparateur (C1) et à une première entrée d'un deuxième comparateur (C2),
- dans lequel la troisième sortie (C) peut être reliée ou est reliée durablement à une deuxième entrée du deuxième comparateur (C2) et à une première entrée d'un troisième comparateur (C3),
- dans lequel la quatrième sortie (D) peut être reliée ou est reliée durablement à une deuxième entrée du troisième comparateur (C3) et
- dans lequel le premier comparateur (C1) produit un premier signal (S1) de commande, le deuxième comparateur (C2) produit un deuxième signal (S2) de commande et le troisième comparateur (C3) produit un troisième signal (S3) de commande.

9. Dispositif suivant les revendications 5 à 7,
dans lequel il est prévu chaque fois un registre (P1 ... P5) de position pour les plus grandes valeurs de fonctions d'appartenance (pointeur MAX), pour les valeurs de fonctions d'appartenance les plus proches immédiatement inférieures (pointeur MAX') jusqu'aux plus petites (pointeur MIN) de toutes les valeurs de fonctions d'appartenance à entrer en l'espace d'une cadence de processeur, la largeur de mots des registres (P1 ... P5) de position correspondant chaque fois au nombre des valeurs de fonctions d'appartenance à entrer au maximum et l'organe de maintien qui contient la valeur de fonctions d'appartenance étant repéré de manière significative du point de vue des bits par. un un logique à l'emplacement correspondant dans le registre de position associé.
